# EUROPÄISCHE PATENTSCHRIFT

(11) **EP 3 387 273 B1**
(45) Veröffentlichungstag und Bekanntmachung des Hinweises auf die Patenterteilung: **09.10.2019**
(21) Anmeldenummer: 16785509.7
(22) Anmeldetag: 26.10.2016
(51) Int. Cl.: F16C 11/06, B60S 1/24

(54) **GELENKSTANGE MIT KUGELSCHALE UND VERFAHREN ZUM BEFESTIGEN EINER KUGELSCHALE IN EINER GELENKSTANGE**
JOINT ROD HAVING A BALL SOCKET AND METHOD FOR FASTENING A BALL SOCKET IN A JOINT ROD
BARRE ARTICULÉE POURVUE D'UNE COQUE SPHÉRIQUE ET PROCÉDÉ POUR FIXER UNE COQUE SPHÉRIQUE DANS UNE BARRE ARTICULÉE

(30) Priorität: 08.12.2015 DE 102015224616
(43) Veröffentlichungstag der Anmeldung: 17.10.2018
(73) Patentinhaber: Robert Bosch GmbH, 70442 Stuttgart (DE)
(72) Erfinder: TRENKLE, Lothar, 77833 Ottersweier (DE); WEILER, Michael, 77815 Buehl (DE)
(86) Internationale Anmeldenummer: PCT/EP2016/075716
(87) Internationale Veröffentlichungsnummer: WO 2017/097488

(56) Entgegenhaltungen:
- EP-A1- 0 607 610
- DE-A1-102012 201 887
- DE-U1- 20 120 251
- JP-A- H1 037 944

## Beschreibung

### Stand der Technik

Die vorliegende Erfindung betrifft eine Gelenkstange mit mindestens einer Kugelschale, einen Wischerantrieb für ein Fahrzeug mit der Gelenkstange sowie ein Verfahren zum Herstellen der Gelenkstange.

Scheibenwischerantriebe für Fahrzeuge, insbesondere für die Frontscheibe von Kraftfahrzeugen, weisen oftmals ein Koppelgestänge mit einer oder mehreren Gelenkstangen auf, mit dem einer der Wischer an einen Antriebsmotor angelenkt ist, um ihn anzutreiben. Die Druckschrift DE 44 44 066 A1 offenbart einen solchen Scheibenwischerantrieb.

Durch die Länge und Anordnung der Gelenkstangen solcher Koppelgestänge wird die Wischbewegung der Scheibenwischer vorgegeben. Um einen Scheibenwischerantrieb an verschiedene Fahrzeugmodelle anzupassen und/oder die Wischbewegung zu verändern, werden daher verschiedene Gelenkstangen genutzt.

In eine solche Gelenkstange sind zumindest eine oder mehrere offene oder geschlossene Kugelschalen angeordnet, die zur Aufnahme von Kugelbolzen vorgesehen sind, die in ihnen geführt werden. Die Kugelschalen stellen so die erforderliche Gelenkigkeit des betriebenen Scheibenwischerantriebs sicher.

Bekannt sind sowohl flache ausgebildete Gelenkstangen als auch Rohrgelenkstangen. Bei den Rohrgelenkstangen wird das Kopfende abgeflacht. Am Kopfende wird ein Loch eingestanzt, in das die Kugelschale eingespritzt wird. Eine solche Kugelschale ist in der Regel aus einem Kunststoff gebildet.

Dafür muss die Gelenkstange in ein Kunststoff- Spritzwerkzeug eingelegt werden. Jedoch sind solche Gelenkstangen verhältnismäßig lang, und das Handling der Gelenkstange ist daher schwierig. Für verschieden lange Gelenkstangen muss das Spritzwerkzeug zudem jedes Mal neu justiert werden.

### Offenbarung der Erfindung

Aufgabe der vorliegenden Erfindung ist es, den Aufwand zum Befestigen einer Kugelschale in einer Gelenkstange, insbesondere eines Scheibenwischerantriebs, zu verringern und dennoch eine kostengünstige Gelenkstange mit einer sicher in der Gelenkstange befestigten Kugelschale zu schaffen, sowie ein Verfahren zum Herstellen der Gelenkstange.

Die Aufgabe wird gelöst mit einer Gelenkstange mit den Merkmalen des unabhängigen Patentanspruchs 1, mit einem Scheibenwischerantrieb mit den Merkmalen des unabhängigen Patentanspruchs 11 und einem Verfahren zum Herstellen der Gelenkstange mit den Merkmalen des unabhängigen Patentanspruchs 12. Vorteilhafte Ausführungsformen sind den abhängigen Ansprüchen entnehmbar.

Dafür wird eine Gelenkstange geschaffen. Die Gelenkstange weist einen Grundkörper auf, in dem zumindest eine Ausnehmung angeordnet ist. Zudem weist sie eine Kugelschale auf, die in der Ausnehmung angeordnet ist.

Die Gelenkstange zeichnet sich dadurch aus, dass die Kugelschale in die Ausnehmung eingelegt und kraft- und/oder formschlüssig im Grundkörper befestigt ist.

Die Kugelschale ist bei der erfindungsgemäßen Gelenkstange daher nicht stoffschlüssig befestigt.

Bevorzugt ist die Kugelschale durch ein Verformen des Grundkörpers in dieser befestigt. Dabei ist es bevorzugt, dass das Verformen ein Umknicken, Umlegen, Bördeln, Falzen und/oder Einrollen des Grundkörpers ist. Bei dieser Ausführungsform ist sie daher mechanisch im Grundkörper befestigt. Da bei dieser Art und Weise der Befestigung keine aufwändige Umspritzung der Kugelschale erforderlich ist, ist die Befestigung sehr kostengünstig möglich. Dabei kann die Kugelschale in einem Werkzeug als Einzelteil hergestellt werden, was umso kostengünstiger ist, wenn ein Mehrfachwerkzeug verwendet wird.

Dafür weist der Grundkörper bevorzugt zumindest einen Umformbereich auf, der zum Befestigen der Kugelschale vorgesehen ist. Der Umformbereich ist besonders bevorzugt ein Faltbereich. Dabei können gegebenenfalls bereits während des Stanzens und Biegens des Grundkörpers Knick-, Falt-, Bördel- und/oder Falzlinien vorgesehen werden.

In dieser Ausführungsform ist es ganz besonders bevorzugt, dass der Grundkörper zumindest zwei, insbesondere einander gegenüberliegend angeordnete, Umformbereiche aufweist. Besonders bevorzugt sind die Umformbereiche symmetrisch zu einer Mittellinie angeordnet. Durch Umformen der Umformbereiche wird die Kugelschale zumindest teilweise vom Grundkörper umschlossen. Es können noch weitere Umformbereiche vorgesehen sein, um die Kugelschale so weit wie möglich umfangsgeschlossen zu umgeben.

Weiterhin sind die Ausnehmung sowie die Kugelschale bevorzugt an einem Kopfende der Gelenkstange angeordnet. Es sind aber auch Gelenkstangen bevorzugt, bei denen die Ausnehmung und Kugelschale in einem mittigen Bereich der Gelenkstange angeordnet sind. Zudem ist eine Gelenkstange mit zwei gegenüberliegend angeordneten Kopfenden bevorzugt, wobei an beiden Kopfenden jeweils eine Kugelschale in einer Ausnehmung angeordnet ist.

Der Grundkörper ist bevorzugt aus einem Flachbandmaterial, insbesondere aus einem Blech, hergestellt. Besonders bevorzugt ist er als ein Stanzbiegeteil hergestellt. Das Umformen der Umformbereiche kann bei dieser Ausführungsform vorteilhaft zumindest teilweise in das Herstellen des Grundkörpers integriert werden. Die Herstellung der Gelenkstange ist dadurch besonders kostengünstig möglich.

Die Aufgabe wird weiterhin gelöst mit einem Scheibenwischerantrieb mit zumindest einer solchen Gelenkstange. Der Scheibenwischerantrieb weist ein Koppelgestänge mit der Gelenkstange auf, das zum Antrieb eines Scheibenwischers vorgesehen ist. Dafür weist er zudem einen Elektromotor auf, vorzugsweise einen Synchronmotor oder einen Gleichstrommotor. Es ist bevorzugt, dass der Elektromotor eine reversierende Bewegung ausführt, durch die der Scheibenwischer eine hin- und her Bewegung ausführt.

Die Aufgabe wird weiterhin gelöst mit einem Verfahren zum Herstellen einer solchen Gelenkstange, bei dem in einen Grundkörper der Gelenkstange eine Ausnehmung eingefügt wird. Bevorzugt wird die Ausnehmung in den Grundkörper eingestanzt, ausgelasert oder eingebohrt. Anschließend wird eine Kugelschale in die Ausnehmung eingelegt. Danach wird der Grundkörper, und zwar zumindest ein Umformbereich des Grundkörpers, so verformt, dass die Kugelschale unverlierbar im Grundkörper befestigt ist. Dabei wird der Grundkörper umgeknickt, umgelegt, gebördelt, gefalzt und/oder eingerollt. Je nach Art und Weise der Umformung sowie der Anordnung der Umformbereiche ist die Kugelschale danach unlösbar im Grundkörper befestigt.

Durch geschickte Dimensionierung und Positionierung von Sicken, Falze, Bördel etc. kann der Grundkörper im Bereich der Kugelschale in seiner Festigkeit und Steifigkeit dadurch sogar optimiert und verbessert werden. Die Knickbelastbarkeit der Gelenkstange in diesem Bereich wird dadurch deutlich erhöht und verbessert.

Im Folgenden wird die Erfindung anhand von Figuren beschrieben. Die Figuren sind lediglich beispielhaft und schränken den allgemeinen Erfindungsgedanken nicht ein.
- Fig. 1: zeigt in (a) und (b) eine Gelenkstange nach dem Stand der Technik in verschiedenen perspektivischen Ansichten; und
- Fig. 2: zeigt in (a) und in (b) schematisch eine erfindungsgemäße Gelenkstange während der Herstellung.

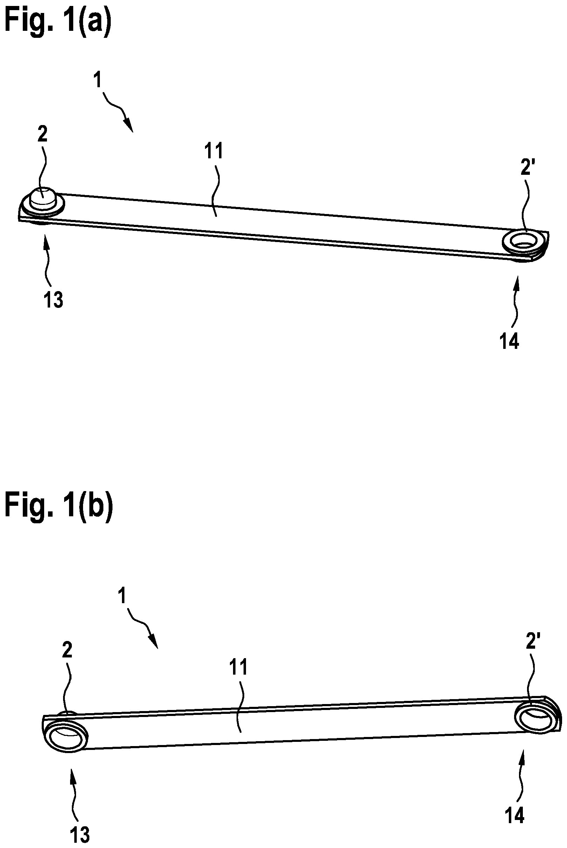

Fig. 1 zeigt in (a) und (b) eine Gelenkstange 1 nach dem Stand der Technik in verschiedenen perspektivischen Ansichten.

Die Gelenkstange 1 weist einen Grundkörper 11 auf, der aus einem Flachbandmaterial, hier aus einem ebenen Blech, als Stanzbiegeteil hergestellt ist. Die Erfindung ist aber nicht auf eine solche flache Gelenkstange 1 beschränkt, sondern umfasst auch Rohrgelenkstangen.

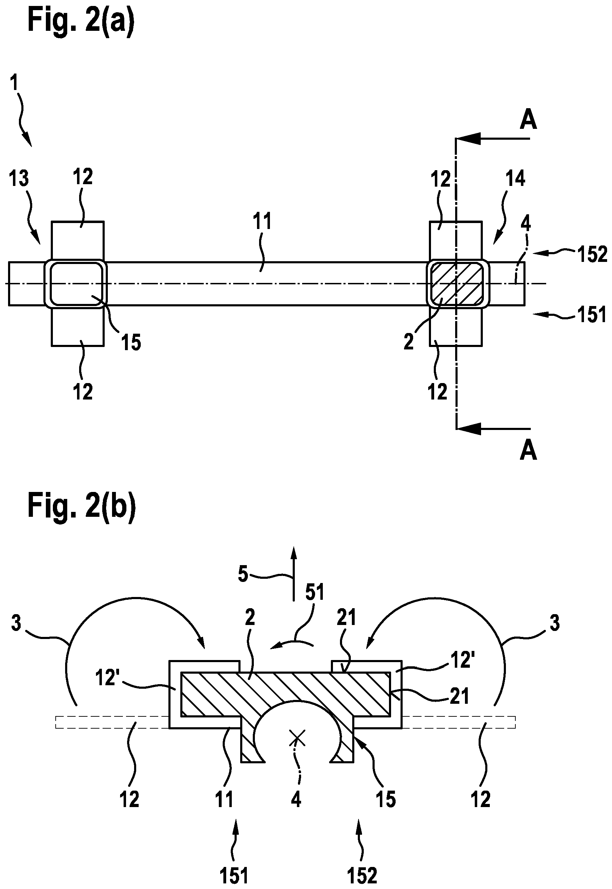

Die Gelenkstange 1 weist zwei einander gegenüberliegende offene Kopfenden 13, 14 auf. An beiden Kopfenden 13, 14 ist jeweils eine Ausnehmung 15 (s. Fig. 2 (a)) vorgesehen, in die eine Kugelschale 2, 2' eingeformt ist. Dabei ist eine erste der beiden Kugelschalen 2, 2' eine geschlossene Kugelschale 2 und eine zweite der beiden Kugelschalen 2, 2' eine offene Kugelschale 2'.

Die Kugelschalen 2, 2' sind durch Kunststoff- Spritzguss in der Gelenkstange 1 befestigt.

Fig. 2 zeigt in (a) eine Gelenkstange 1 während ihrer Herstellung.

Die Gelenkstange 1 weist einen Grundkörper 11 mit zwei einander gegenüberliegenden offenen Kopfenden 13, 14 auf. An beiden Kopfenden 13, 14 ist jeweils eine Ausnehmung 15 vorgesehen. Die Ausnehmung 15 durchsetzt den Grundkörper 11 in eine Erstreckungsrichtung 5. Dabei ist in einer zweiten der beiden Ausnehmungen 15 eine geschlossene Kugelschale 2 angeordnet. In der ersten der beiden Ausnehmungen 15 ist noch keine Kugelschale 2, 2' angeordnet.

Die Erfindung ist nicht auf geschlossene Kugelschalen 2 begrenzt, sondern erstreckt sich auch auf offene Kugelschalen 2'.

Der Grundkörper 11 ist aus einem ebenen Blech als Stanzbiegeteil hergestellt. Er erstreckt sich hier quer zur Erstreckungsrichtung 5.

Die Ausnehmungen 15 sind hier etwa rechteckig ausgebildet. Sie können aber auch eine andere Querschnittsform, beispielsweise eine runde oder ovale Querschnittsform, aufweisen.

An den Kopfenden 13, 14 sind am Grundkörper 11 jeweils an gegenüber liegenden Seiten 151, 152 der Ausnehmungen 15 zwei Umformbereiche 12 vorgesehen. Die Umformbereiche 12 sind hier als etwa rechteckförmige Faltbereiche ausgebildet. Die Form, Größe und Platzierung der Umformbereiche 12 ist aber in Abhängigkeit von der Anordnung der Ausnehmung 15 und der Kugelschale 2, der Form der Gelenkstange 1, der Art der Umformung sowie der Form der Kugelschale 2 anpassbar.

Die Gelenkstange 1 ist hier spiegelsymmetrisch zu einer Mittellinie 4 ausgebildet, wobei auch die Umformbereiche 12 spiegelsymmetrisch zu der Mittellinie 4 angeordnet sind.

Fig. 2 (b) zeigt das Befestigen der am zweiten Kopfende 13, 14 angeordneten Kugelschale 2 der Gelenkstange 1 der Fig. 2 (a) schematisch. Dargestellt ist ein Schnitt A-A durch die Gelenkstange 1 der Fig. 2 (a).

Sichtbar ist, dass die Umformbereiche 12 um Außenflächen 21 der Kugelschale 2 herum gelegt werden. Dies ist durch gestrichelte Linien der Umformbereiche 12 dargestellt. Bei der hier dargestellten Gelenkstange 1 erfolgt dies an den gegenüberliegenden Seiten 151, 152 der Ausnehmung 15. Dabei werden die Umformbereiche 12 hier umgefaltet, und zwar durch zweimaliges Umknicken.

Zudem durchdringt die Kugelschale 2 die Ausnehmung 15. Die Kugelschale 2 ist daher im montierten Zustand der Gelenkstange 1 vom Grundkörper 11 zumindest teilweise umschlossen, und unverlierbar in diesem befestigt.

Je nach dem, mit welcher Art und Weise der Umformung die Kugelschale 2 im Grundkörper 11 befestigt wird, kann sie so nicht zerstörungsfrei lösbar im Grundkörper 11 angeordnet werden.

Vorteilhaft ist es weiterhin, die Kugelschale 2 in einer tangentialen Richtung 51 zur Erstreckungsrichtung 5 so weit wie möglich umfangsgeschlossen zu befestigen.

Bei Gelenkstangen 1, die als Stanzbiegeteile hergestellt werden, insbesondere aus ebenen Blechen, oder die eine mechanische Bearbeitung erfordern, kann die Umformung der Umformbereiche 12 zumindest teilweise in die ohnehin erforderlichen Bearbeitungsschritte integriert werden. Bei solchen Gelenkstangen 1 ist die Befestigung der Kugelschalen 2, 2' durch eine solche Umformung besonders kostengünstig und vorteilhaft.

## Patentansprüche

1. Gelenkstange (1) mit einem Grundkörper (11), in dem zumindest eine Ausnehmung (15) angeordnet ist, und mit einer Kugelschale (2, 2'), die in der Ausnehmung (15) angeordnet ist,
**wobei**
die Kugelschale (2, 2') in die Ausnehmung (15) eingelegt und kraft- und/oder formschlüssig im Grundkörper (11) befestigt ist, **dadurch gekennzeichnet, dass** der Grundkörper (11) zumindest einen faltbaren Umformbereich (12) aufweist, der zum Befestigen der Kugelschale (2, 2') vorgesehen ist, wobei zwei einander gegenüberliegend angeordnete Umformbereiche (12) vorgesehen sind.

2. Gelenkstange (1) nach Anspruch 1, **dadurch gekennzeichnet, dass** die Kugelschale (2, 2') durch ein Verformen des Grundkörpers (11) in dieser befestigt ist.

3. Gelenkstange (1) nach einem der vorherigen Ansprüche, **dadurch gekennzeichnet, dass** das Verformen ein Knicken, Umlegen, Bördeln, Falzen und/oder Einrollen des Grundkörpers (11) ist.

4. Gelenkstange (1) nach einem der vorherigen Ansprüche, **dadurch gekennzeichnet, dass** die Ausnehmung (15) sowie die Kugelschale (2, 2') an einem Kopfende (13, 14) der Gelenkstange (1) angeordnet ist.

5. Gelenkstange (1) nach einem der vorherigen Ansprüche, **dadurch gekennzeichnet, dass** sie zwei gegenüberliegende Kopfenden (13, 14) aufweist, wobei an beiden Kopfenden (13, 14) jeweils eine Kugelschale (2, 2') in einer Ausnehmung (15) angeordnet ist.

6. Gelenkstange (1) nach einem der vorherigen Ansprüche, **dadurch gekennzeichnet, dass** der Grundkörper (11) aus einem Flachbandmaterial, insbesondere aus einem Blech, hergestellt ist.

7. Gelenkstange (1) nach einem der vorherigen Ansprüche, **dadurch gekennzeichnet, dass** der Grundkörper (11) ein Stanzbiegeteil ist.

8. Gelenkstange (1) nach einem der vorherigen Ansprüche, **dadurch gekennzeichnet, dass** der Grundkörper (11) die Kugelschale (2, 2') zumindest teilweise umgibt.

9. Scheibenwischerantrieb mit zumindest einer Gelenkstange (1) nach einem der vorherigen Ansprüche.

10. Verfahren zum Herstellen einer Gelenkstange (1) nach einem der Ansprüche 1 - 8, **dadurch gekennzeichnet dass**
- In einen Grundkörper (11) der Gelenkstange (1) eine Ausnehmung (15) entnommen wird;
- Eine Kugelschale (2, 2') in die Ausnehmung (15) eingelegt wird; und
- Der Grundkörper (11) so verformt wird, dass die Kugelschale (2, 2') unverlierbar im Grundkörper (11) befestigt ist.

## Claims

1. Joint rod (1) having a main body (11), in which at least one recess (15) is arranged, and having a ball socket (2, 2') which is arranged in the recess (15), **wherein**
the ball socket (2, 2') is placed into the recess (15) and fastened in the main body (11) in a force-fitting and/or form-fitting manner, **characterized in that** the main body (11) has at least one foldable deformation region (12) which is provided for the fastening of the ball socket (2, 2'), wherein two deformation regions (12) arranged opposite each other are provided.

2. Joint rod (1) according to Claim 1, **characterized in that** the ball socket (2, 2') is fastened in the main body (11) by deformation of same.

3. Joint rod (1) according to either of the preceding claims, **characterized in that** the deformation comprises buckling, doubling over, crimping, folding and/or rolling up the main body (11).

4. Joint rod (1) according to one of the preceding claims, **characterized in that** the recess (15) and the ball socket (2, 2') are arranged at a head end (13, 14) of the joint rod (1).

5. Joint rod (1) according to one of the preceding claims, **characterized in that** it has two opposite head ends (13, 14), wherein a respective ball socket (2, 2') is arranged in a recess (15) at both head ends (13, 14).

6. Joint rod (1) according to one of the preceding claims, **characterized in that** the main body (11) is produced from a flat strip material, in particular from a sheet metal.

7. Joint rod (1) according to one of the preceding claims, **characterized in that** the main body (11) is a punched and bent part.

8. Joint rod (1) according to one of the preceding claims, **characterized in that** the main body (11) at least partially surrounds the ball socket (2, 2').

9. Windscreen wiper drive having at least one joint rod (1) according to one of the preceding claims.

10. Method for producing a joint rod (1) according to one of Claims 1-8, **characterized in that**
- a recess (15) is removed from a main body (11) of the joint rod (1);
- a ball socket (2, 2') is placed into the recess (15); and
- the main body (11) is deformed in such a manner that the ball socket (2, 2') is fastened captively in the main body (11).

## Revendications

1. Barre articulée (1) comprenant un corps de base (11), dans lequel est ménagé au moins un évidement (15), et une coque sphérique (2, 2') qui est disposée dans l'évidement (15),
la coque sphérique (2, 2') étant insérée dans l'évidement (15) et fixée dans le corps de base (11) par complémentarité de formes et/ou par ajustage serré, **caractérisée en ce que** le corps de base (11) comporte au moins une zone de déformation pliable (12) qui est prévue pour fixer la coque sphérique (2, 2'), deux zones de déformation (12) étant prévues qui sont disposées l'une en face de l'autre.

2. Barre articulée (1) selon la revendication 1, **caractérisée en ce que** la coque sphérique (2, 2') est fixée dans le corps de base (11) par déformation de celui-ci.

3. Barre articulée (1) selon l'une des revendications précédentes, **caractérisée en ce que** la déformation est un processus de flambage, de retournement, de bordage, de pliage et/ou de calandrage du corps de base (11).

4. Barre articulée (1) selon l'une des revendications précédentes, **caractérisée en ce que** l'évidement (15) et la coque sphérique (2, 2') sont disposés au niveau d'une extrémité de tête (13, 14) de la barre articulée (1).

5. Barre articulée (1) selon l'une des revendications précédentes, **caractérisée en ce qu'**elle comporte deux extrémités de tête (13, 14) opposées, une coque sphérique (2, 2') étant disposée dans un évidement (15) à chacune des deux extrémités de tête (13, 14).

6. Barre articulée (1) selon l'une des revendications précédentes, **caractérisée en ce que** le corps de base (11) est réalisé à partir d'un matériau en bande plate, notamment d'une tôle.

7. Barre articulée (1) selon l'une des revendications précédentes, **caractérisée en ce que** le corps de base (11) est une pièce estampée et pliée.

8. Barre articulée (1) selon l'une des revendications précédentes, **caractérisée en ce que** le corps de base (11) entoure au moins partiellement la coque sphérique (2, 2').

9. Entraînement d'essuie-glace comprenant au moins une barre articulée (1) selon l'une des revendications précédentes.

10. Procédé de fabrication d'une barre articulée (1) selon l'une des revendications 1 à 8, **caractérisé en ce que**
- un évidement (15) est ménagé dans un corps de base (11) de la barre articulée (1) ;
- une coque sphérique (2, 2') est insérée dans l'évidement (15) ; et
- le corps de base (11) est déformé de façon à fixer la coque sphérique (2, 2') de manière imperdable dans le corps de base (11).
